# EUROPÄISCHE PATENTANMELDUNG

(11) **EP 3 560 739 A1**
(43) Veröffentlichungstag der Anmeldung: **30.10.2019**
(21) Anmeldenummer: 19020302.6
(22) Anmeldetag: 23.04.2019
(51) Int. Cl.: B60H 1/34, F24F 13/10

(54) **KLIMADÜSE FÜR EIN FAHRZEUG**

(30) Priorität: 24.04.2018 DE 102018109858
(71) Anmelder: IAV GmbH, 10587 Berlin (DE)
(72) Erfinder: ULBRICH, Michael, 38464 Groß Twülpstedt (DE); VOISSEL, Thilo, 38110 Braunschweig (DE); RESKE, Uwe, 29559 Wrestedt (DE); FRANZKE, Christopher, 09127 Chemnitz (DE); ULLMANN, Florian, 08056 Zwickau (DE)
(74) Vertreter: Fukala, Georg

(57) **Zusammenfassung**

Klimadüse (1) für ein Fahrzeug, wobei die Klimadüse (1) an einem einem Fahrzeuginnenraum zugewandten Ende (6) eine Coanda-Kontur (7) aufweist, und innerhalb der Klimadüse (1) ein wendelförmiges Leitelement (4) angeordnet ist.

## Beschreibung

### Technisches Gebiet

Die Erfindung betrifft eine Klimadüse mit Coanda-Effekt gemäß dem Oberbegriff des Anspruchs 1.

### Stand der Technik

Die DE 10 2015 116 922 A1 beschreibt einen Belüftungskanal zur Belüftung eines Fahrgastinnenraums eines Kraftfahrzeugs mit einem Anströmkanal zur Zufuhr von Luft, einem sich von dem Anströmkanal bis zu einer Auslassöffnung erstreckenden Hauptleitkanal zum Leiten zumindest eines Teils der Luft des Anströmkanals entlang einer Hauptströmungsrichtung in Richtung der Auslassöffnung, mindestens einem von dem Anströmkanal abzweigenden Bypasskanal zum Ableiten eines Teils der Luft des Anströmkanals, wobei der Bypasskanal den Hauptleitkanal zumindest teilweise in Umfangsrichtung umgibt.

Eine um eine axial verlaufende Drehachse drehbare Bypassblende kann in Hauptströmungsrichtung zwischen dem Anströmkanal und dem Bypasskanal angeordnet sein.

Der Hauptleitkanal kann in einem Endbereich zur Erzeugung eines Coanda-Effekts gerundet sein.

Die DE 10 2005 002 067 A1 beschreibt eine Heizungs-, Belüftungs- oder Klimaanlage mit einem Gehäuse, in welchem gegebenenfalls zumindest ein Wärmetauscher, wie Heizkörper und/oder Verdampfer aufgenommen ist zur Temperierung der Luft, mit einem Gebläse, mit zumindest einem Luftkanal zur Zuführung von vorzugsweiser temperierter Luft zu einem Luftausströmer und mit mindestens einem Luftausströmer, aus welchem Luft vorzugsweise in einen Innenraum eines Fahrzeuges ausströmt, wobei die Ausströmcharakteristik des Luftausströmers zwischen einer ersten Charakteristik mit Streucharakter und einer zweiten Charakteristik mit Spotcharakter steuerbar verstellbar ist.

Die DE 10 2015 206 621 A1 beschreit eine Luftstromsteuereinheit, insbesondere Luftauslassdüse für einen Fahrzeuginnenraum eines Kraftfahrzeugs, mit einem Luftkanal mit einer Lufteinlassöffnung und mit einer Luftauslassöffnung und mit mehreren darin verstellbar angeordneten Luftleitelementen zur Erzeugung von wenigstens einer drallartigen Luftströmung.

In Längsrichtung des Luftkanals gesehen sind die Luftleitelemente jeweils als axial hintereinander und um eine erste Achse drehbar angeordnete, luftdurchlässige Scheiben ausgebildet.

Jede Scheibe weist einen Ring mit einer Außenseite und einer Innenseite auf, mit Stegen, welche mit der Innenseite des Rings verbunden sind, wobei die Stege von der Innenseite nach radial innen in Richtung auf die erste Achse verlaufend angeordnet sind.

Die DE 10 2004 023 495 A1 beschreibt einen Luftausströmer, insbesondere für ein Kraftfahrzeug, mit mindestens einem in einem Strömungskanal angeordneten Luftleitelement, das dem Luftstrom bei Eintritt aus einem Luftkanal in den LUftausströmer einen Drall auferlegt.

Entlang der Mittelachse des Strömungskanals ist ein Strömungskörper ausgebildet.

### Aufgabe der Erfindung

Der Erfindung liegt die Aufgabe zugrunde, eine Klimadüse bereitzustellen, welche ein verwirbelungsarmes Durchströmungsverhalten aufweist.

### Lösung der Aufgabe

Die Erfindung wird durch eine Klimadüse gemäß Anspruch 1 gelöst.

### Vorteile der Erfindung

Innerhalb der erfindungsgemäßen Klimadüse mit Coanda-Kontur ist ein wendelförmiges Leitelement angeordnet.

Mittels des wendelförmigen Leitelements wird einer Bildung von Verwirbelungen des durchströmenden Luftstroms entgegengewirkt.

Ein verwirbelungsarmes Durchströmungsverhalten wirkt sich auch positiv auf die Akustik im Fahrzeuginnenraum aus.

Durch die geometrische Form des Leitblechs und die geometrische Form der Coanda-Kontur kann der Luftstrom bei niedriger Ausströmungsgeschwindigkeit stark umgelenkt werden und bei höherer Geschwindigkeit ein mehr diffuses Ausströmungsverhalten erzielt werden.

In einer vorteilhaften Ausführungsform der Erfindung ist das wendelförmige Leitelement um eine Längsachse der Klimadüse rotatorisch bewegbar.

In Verbindung mit einem personalisierten Klimakonzept ist der Luftstrom und dessen Richtung automatisch regelbar.

Das personalisierte Klimatisierungskonzept kann auf einer individuellen Temperaturzone für einen erfassten Fahrgast beruhen.

Mittels einer Sensorik kann erfasst werden, ob der Fahrgast beispielsweise friert, schwitzt oder müde ist.

In der Klimadüse können Elemente zum Einstellen der Lufttemperatur sowie Elemente zum Ionisieren oder Beimischen von olfaktorischen Komponenten angeordnet sein.

In einer weiteren vorteilhaften Ausführungsform der Erfindung weist das wendelförmige Leitelement ein erstes Ende und ein zweites Ende auf, wobei sich das zweite Ende bis zur Coanda-Kontur erstreckt.

Mittels der erfindungsgemäßen Klimadüse können einzelne Bereiche des Fahrzeuginnenraums klimatisiert werden, so dass im Vergleich zur Klimatisierung des gesamten Innenraums weniger Energie erforderlich ist.

In Verbindung mit einer Diagnose von beschlagenen oder vereisten Fahrzeugscheiben ist mittels der erfindungsgemäßen Klimadüse eine Beschlagsreduktion oder vollautomatische Enteisung möglich.

### Zeichnungen

Es zeigen:
- Fig. 1:: einen Längsschnitt durch eine erfindungsgemäße Klimadüse;
- Fig. 2:: eine perspektivische Ansicht auf die Klimadüse gemäß Figur 1.

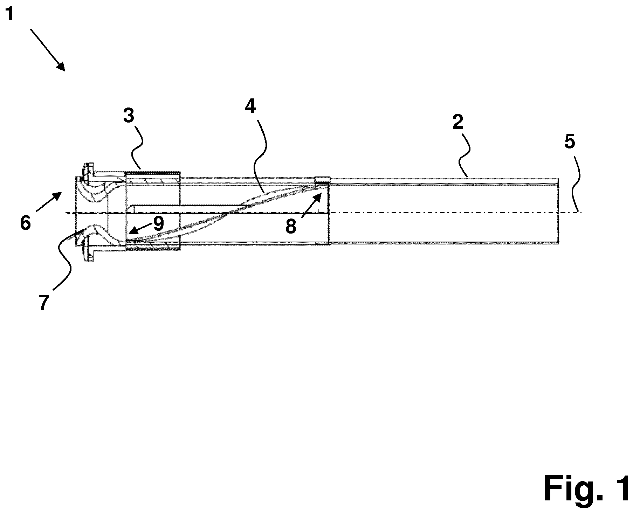

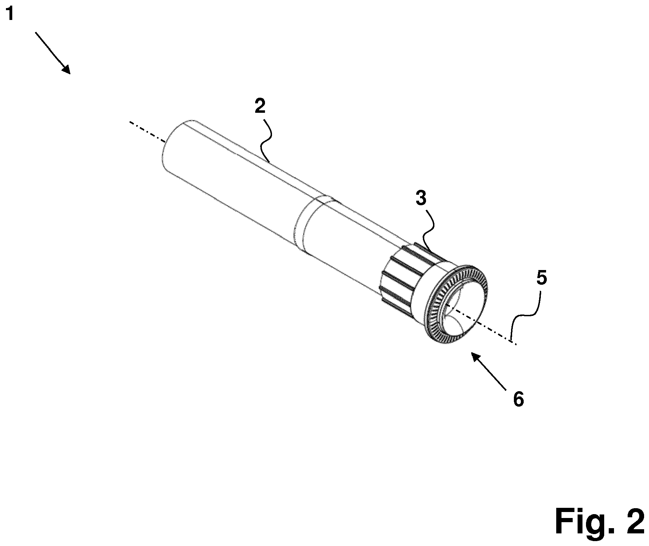

Die Fig. 1 und Fig. 2 zeigen eine erfindungsgemäße Klimadüse 1 für ein Fahrzeug.

Die Klimadüse 1 umfasst ein Gehäuse 2 mit einer Verstellvorrichtung 3.

Innerhalb der Klimadüse 1 ist ein wendelförmiges Leitblech 4 angeordnet, welches mit der Verstellvorrichtung 3 wirkverbunden ist und rotatorisch um eine Längsachse 5 der Klimadüse 1 bewegbar ist.

Eine rotatorische Bewegung des Leitblechs 4 erfolgt durch eine Betätigung der Verstellvorrichtung 3, wobei die Verstellvorrichtung 3 mit dem Leitblech 4 fest verbunden und diese über einen nicht dargestellten Stellmotor rotatorisch bewegbar sein kann.

Die rotatorische Bewegung kann über 360° mit einer Überwachung der derzeitigen Drehlage erfolgen, um eine definierte Strömungsrichtung zu ermöglichen.

Durch eine gezielte rotatorische Bewegung des Leitblechs 4 ist eine vollautomatische Klimatisierung möglich.

Stromaufwärts des Leitblechs 4 ist das Gehäuse 2 linear angeordnet, um den Luftstrom verwirbelungsarm in die Kontur des Leitblechs 4 zu führen.

Die lineare Anordnung des Gehäuses 2 kann derart gewählt werden, dass das Leitblech 4 ungefähr einen Anteil von 1/3 aufweist, so dass der lineare Anteil ohne Leitblech 4 im Gehäuse 2/3 beträgt.

An einem dem nicht dargestellten Fahrgastinnenraum zugewandten Ende 6 weist die Klimadüse 1 eine Coanda-Kontur 7 auf.

Die Coanda-Kontur 7 weist im Austrittsbereich einen runden Querschnitt auf, wobei auch weitere Querschnittsformen, beispielsweise rechteckig, möglich sind.

Die Coanda-Kontur 7 ist strömungsabhängig in ein Design des Fahrzeuginnenraums einbettbar.

Das Leitblech 4 weist ein erstes Ende 8 und ein dem ersten Ende 8 entgegengesetztes zweites Ende 9 auf.

Das zweite Ende 9 des Leitblechs 4 erstreckt sich bis zur Coanda-Kontur 7.

Durch diese Anordnung kann ein verwirbelungsarmes Durchströmungsverhalten und somit eine Geräuschreduktion erzielt werden.

### Bezugszeichenliste

- 1: Klimadüse
- 2: Gehäuse
- 3: Verstellvorrichtung
- 4: Leitblech
- 5: Längsachse
- 6: Ende
- 7: Coanda-Kontur
- 8: Erstes Ende
- 9: Zweites Ende

## Patentansprüche

1. Klimadüse (1) für ein Fahrzeug, wobei die Klimadüse (1) an einem einem Fahrzeuginnenraum zugewandten Ende (6) eine Coanda-Kontur (7) aufweist, **dadurch gekennzeichnet, dass** innerhalb der Klimadüse (1) ein wendelförmiges Leitelement (4) angeordnet ist, so dass durch die geometrische Form des Leitelements (4) und die geometrische Form der Coanda-Kontur (7) ein durchströmender Luftstrom bei niedriger Ausströmungsgeschwindigkeit stark umgelenkt und bei höherer Geschwindigkeit ein mehr diffuses Ausströmungsverhalten erzielt werden kann.

2. Klimadüse (1) nach Anspruch 1, **dadurch gekennzeichnet, dass** das wendelförmige Leitelement (4) um eine Längsachse (5) der Klimadüse (1) rotatorisch bewegbar ist.

3. Klimadüse (1) nach Anspruch 1 oder 2, **dadurch gekennzeichnet, dass** das wendelförmige Leitelement (4) ein erstes Ende (8) und ein zweites Ende (9) aufweist, wobei das zweite Ende (9) sich bis zur Coanda-Kontur (7) erstreckt.
